# EUROPÄISCHE PATENTSCHRIFT

(11) **EP 2 827 020 B1**
(45) Veröffentlichungstag und Bekanntmachung des Hinweises auf die Patenterteilung: **02.09.2015**
(21) Anmeldenummer: 13003206.3
(22) Anmeldetag: 24.06.2013
(51) Int. Cl.: F16H 3/093, F16H 35/10

(54) **Getriebe für Zerkleinerungsmaschine**
Gear unit for a crushing machine
Engrenage pour un broyeur

(30) Priorität: 29.04.2013 DE 202013004051 U
(43) Veröffentlichungstag der Anmeldung: 21.01.2015
(73) Patentinhaber: Komptech Umwelttechnik GmbH, 8130 Frohnleiten (AT); GKN Walterscheid GmbH, 53797 Lohmar (DE)
(72) Erfinder: Meisenbichler, Reinhard, 8641 St. Marein (AT); Woschizka, Peter, 8700 Leoben (AT); Oberwinkler, Christian, Dr., 8700 Leoben (AT); Diessner, Gerd, 02689 Crostau (DE); Sterzel, Maik, 02627 Kubschütz (DE); Zickler, Eric, 02689 Sohland (DE)
(74) Vertreter: Laufhütte, Dieter

(56) Entgegenhaltungen:
- EP-A1- 1 593 435
- EP-A2- 1 371 513
- AT-B- 273 860
- DE-A1-102011 106 123
- DE-U1-202011 102 931
- GB-A- 2 074 258

## Beschreibung

Die folgende Erfindung betrifft ein Getriebe für Zerkleinerungsmaschinen, wie sie zum Beispiel zum Zerkleinern von Kompostmaterial verwendet werden.

Bei Zerkleinerungsmaschinen ist es im Betrieb regelmäßig erforderlich, die Drehrichtung der drehbaren Zerkleinerungswerkzeuge beziehungsweise -walzen zu wechseln, um zum Beispiel ein Blockieren zu vermeiden beziehungsweise diesem vorzubeugen oder um ein Blockieren zu lösen. Auch können hierdurch bessere Zerkleinerungsergebnisse erzielt werden. Insbesondere lässt sich durch mehrmalige Wechsel der Drehrichtung der drehbaren Zerkleinerungswerkzeuge bei sperrigem Zerkleinerungsgut eine zügige Zerkleinerung erreichen.

Bei den bekannten langsamlaufenden Zerkleinerungsmaschinen werden oftmals hydraulische Antriebe verwendet, um eine Lastbegrenzung und eine einfache Reversiermöglicheit zu haben (siehe z.B. DE 10 2011 106123 A). Diese Art von Zerkleinerungsmaschinen weist jedoch einen ungünstigen Wirkungsgrad auf. Dies macht sich unter anderem bemerkbar, wenn die Zerkleinerungsmaschine häufige Wechsel der Drehrichtung der Zerkleinerungswerkezuge vornehmen muss.

Die derzeit bekannten Systeme unterteilen sich in zwei Klassen: zum einen die genannten Zerkleinerungsmaschinen mit hydraulischem Antrieb, die eine sehr hohe Funktionalität aufweisen und den Vorteil einer kontinuierlichen Drehzahl- und Drehmomentverstellung aufweisen.

Zum anderen sind mechanische Antriebssysteme mit beispielsweise einfachen Getrieben bekannt (siehe z.B. DE 202011102931 U), die sich dann als nachteilig erweisen können, wenn in der Zerkleinerungsmaschine Blockaden auftreten, die dann den Antriebsmotor der Zerkleinerungsmaschine abwürgen können. Weiterhin gibt es bei mechanischen Systemen meist nur einen durch die Übersetzung definierten fixen Betriebspunkt des Antriebsstranges, das heißt eine fixe Drehzahl mit einem fixen Drehmoment. Dabei ist dieser Punkt eine Kompromisseinstellung für alle, also auch unterschiedliche Inputmaterialien der Zerkleinerungsmaschine. Dadurch bedingt kann auf der einen Seite für leicht zu zerkleinernde Materialien die Drehzahl der Zerkleinerungsmaschine zu gering sein, während auf der anderen Seite für schwer zu zerkleinernde Materialien das Drehmoment zu gering sein kann.

Aufgabe der vorliegenden Erfindung ist es daher, ein Getriebe für eine Zerkleinerungsmaschine bereitzustellen, das die genannten Nachteile der aus dem Stand der Technik bekannten Zerkleinerungsmaschinen behebt.

Diese Aufgabe wird erfindungsgemäß durch eine Vorrichtung mit den Merkmalen des Anspruchs 1 gelöst. Demnach ist ein Getriebe für eine Zerkleinerungsmaschine vorgesehen, mit einer Antriebswelle, einer Abtriebswelle und eine Zwischenwelle mit je wenigstens zwei Stirnrädern und wenigstens je einer hydraulischen Schaltkupplung, und mit wenigstens einer Überlastkupplung, wobei die Wellen über die Stirnräder und über die hydraulischen Schaltkupplungen miteinander lösbar koppelbar sind und wobei die Abtriebswelle mittels der Überlastkupplung mit einer Ausgangswelle lösbar kuppelbar ist.

Die Überlastkupplung ermöglicht es hierbei vorteilhafterweise im Falle einer Überlastung, das heißt wenn zum Beispiel schwierig oder nicht zerkleinerbare Materialien von der Zerkleinerungsmaschine erfasst werden, Abtriebswelle und Zerkleinerungswelle bzw. Ausgangswelle voneinander zu entkuppeln. Hierdurch wird ein Abwürgen eines Dieselmotors, oder das Zerstören der Schalterkuppelung im Falle eines E-Motors verhindert.

In einem bevorzugten Ausführungsbeispiel ist dabei denkbar, dass das Getriebe drei Gänge umfasst, während in einem besonders bevorzugten Ausführungsbeispiel die drei Gänge zwei gleichgerichtete Gänge umfassen, wobei ein erster Gang eine kleinere Übersetzung ins Langsame und ein zweiter Gang eine Übersetzung ins Schnelle aufweist, und wobei ein dritter Gang ein zum ersten und zweiten Gang entgegengerichteter Gang ist.

Der erste Gang kann dabei für schwer zu zerkleinerndes Material geeignet sein, wobei er ein langsam drehender Gang mit einem verhältnismäßig hohen Drehmoment ist. Der zweite Gang dagegen ist ein schneller drehender Gang mit einem niedrigeren Drehmoment, der besonders für leicht zu zerkleinerndes Material geeignet ist. Mit dem dritten Gang ist es schließlich zum Beispiel im Falle einer Blockade möglich, die Walzen der Zerkleinerungsmaschine zu reversieren.

In einem weiteren bevorzugten Ausführungsbeispiel ist es denkbar, dass im ersten Gang der Druck in der Überlastkupplung höher als im zweiten Gang ist.

Dadurch rutscht die Überlastkupplung im zweiten Gang früher als im Ersten, wenn es zu einer Blockade der Walzen kommt oder zu kommen droht. Ein Abwürgen des Antriebsmotors wird hierdurch besser verhindert, insbesondere, da das System auf den jeweils verwendeten Antriebsmotor abgestimmt werden kann.

In einem ebenfalls bevorzugten Ausführungsbeispiel ist denkbar, dass die Überlastkupplung außerhalb eines Hauptgehäuses des Getriebes vorgesehen ist.

Dadurch kann die Überlastkupplung im Falle eines Defekts zum Beispiel durch Öffnen eines entsprechenden Deckels vorteilhafterweise einfach ausgetauscht werden. Dabei ist eine Überlastkupplung denkbar, die so ausgelegt ist, dass sie eine Lebensdauer von ca. 10.000 Betriebsstunden erreicht. Bis dahin werden etwa 500.000 Blockaden erwartet, bei denen die Überlastkupplung rutscht. Andere Vorgaben sind selbstverständlich gleichfalls denkbar und im Rahmen der Erfindung umsetzbar.

In einem bevorzugten Ausführungsbeispiel ist es ferner denkbar, dass ein Drehzahlsensor zum Überprüfen eines Rutschens der Überlastkupplung vor und nach einem Auskuppeln und Einkuppeln der Überlastkupplung vorgesehen ist.

Durch den Drehzahlsensor ist es so vorteilhafterweise möglich, die Betriebssicherheit durch Überwachen des Bewegungsverhaltens des Getriebes zu vergrößern.

In einem weiteren bevorzugten Ausführungsbeispiel ist es denkbar, dass das Getriebe eine manuelle oder eine integrierte automatische Schaltung umfasst.

Hierbei kann die Schaltung über in Öl laufende und hydraulisch betätigbare Lamellenkupplungen erfolgen. Das heißt, dass dabei für jeden der drei Gänge je eine Lamellenkupplung integriert ist. Bei einer manuellen Ausführungsform erfolgt dabei die Schaltung durch eine Vorwahl des Benutzers des Getriebes beziehungsweise der Zerkleinerungsmaschine.

In einem besonders bevorzugten Ausführungsbeispiel ist es dabei denkbar, dass die integrierte automatische Schaltung in den ersten Gang schaltet, wenn sie zuvor im zweiten Gang innerhalb einer definierten Zeit blockiert worden ist, wobei die integrierte automatische Schaltung wieder vom ersten in den zweiten Gang schaltet, wenn ein definierter Lastfaktor des Antriebsmotors innerhalb einer definierten Zeit nicht überschritten worden ist.

Hierdurch wird vorteilhafterweise erreicht, dass die Zerkleinerungsmaschine automatisch auf die Eigenschaften des zu zerkleinernden Materials reagieren kann und bei schwer zu zerkleinernden Materialien automatisch in den ersten Gang schaltet, welcher ein größeres Drehmoment bereitstellt und so besser dafür geeignet ist, schwer zu zerkleinernde Materialien zu zerkleinern. Gleichzeitig wird es ermöglicht, automatisch in den schneller laufenden zweiten Gang zu schalten, der mit seinem geringeren Drehmoment für einfacher zu zerkleinernde Materialien ausgelegt ist.

In einem weiteren bevorzugten Ausführungsbeispiel ist denkbar, dass die Überlastkupplung bei blockierter Ausgangswelle erst nach einer definierten Zeit auskuppelt um das Drehmoment an zu zerkleinerndem Material aufrechtzuerhalten.

Hierdurch wird der Antriebsmotor vorteilhafterweise nicht abgewürgt, wenn eine Blockade der Ausgangswelle zum Beispiel aufgrund von schwierig zu zerkleinernden Materialien vorliegt und die Schaltkupplungen des Getriebes werden so nicht belastet.

In einem ebenfalls bevorzugten Ausführungsbeispiel ist vorgesehen, dass bei einer rutschenden Überlastkupplung das volle Drehmoment auf die Ausgangswelle übertragbar ist. Hierdurch wird vorteilhafterweise eventuell ein Zerkleinern des zu zerkleinernden Materials bei nahezu Stillstand der Zerkleinerungswalze durch das Aufrechterhalten des Drehmoments ermöglicht.

In einem weiteren Ausführungsbeispiel ist ferner denkbar, dass eine Steuerung zur Berechnung der Temperatur der Überlastkupplung vorgesehen ist.

Wenn die Überlastkupplung rutscht, wird die Leistung als Reibwärme in die Lamellen der Überlastkupplung eingebracht. Wenn die Überlastkupplung sehr oft hintereinander rutscht, kann diese Wärme gegebenenfalls nicht mehr adäquat abgeführt werden und es besteht die Gefahr, dass die Kupplung thermisch zerstört wird. Durch die Steuerung zur Berechnung der Temperatur ist es möglich, anhand der aktuellen Temperatur des Getriebes die Reversierzeit der Walzen, in welcher die Überlastkupplung über das Kühlöl gekühlt wird, zu verlängern. Hierdurch kann eine thermische Zerstörung der Überlastkupplung verhindert werden.

Als zur Erfindung gehörig offenbart wird auch die Verwendung eines Getriebes gemäß einem der Ansprüche 1 bis 11 für und/oder in einer Zerkleinerungsmaschine nach Anspruch 12.

Weitere Einzelheiten und Vorteile der vorliegenden Erfindung werden anhand von in den Figuren dargestellten Ausführungsbeispielen erläutert. Es zeigen:
- Figur 1:: ein erstes Ausführungsbeispiel des erfindungsgemäßen Getriebes;
- Figuren 2 - 4:: Kraftflüsse in verschiedenen Gängen des ersten Ausführungsbeispiels des Getriebes;
- Figur 5:: ein zweites Ausführungsbeispiel des erfindungsgemäßen Getriebes;

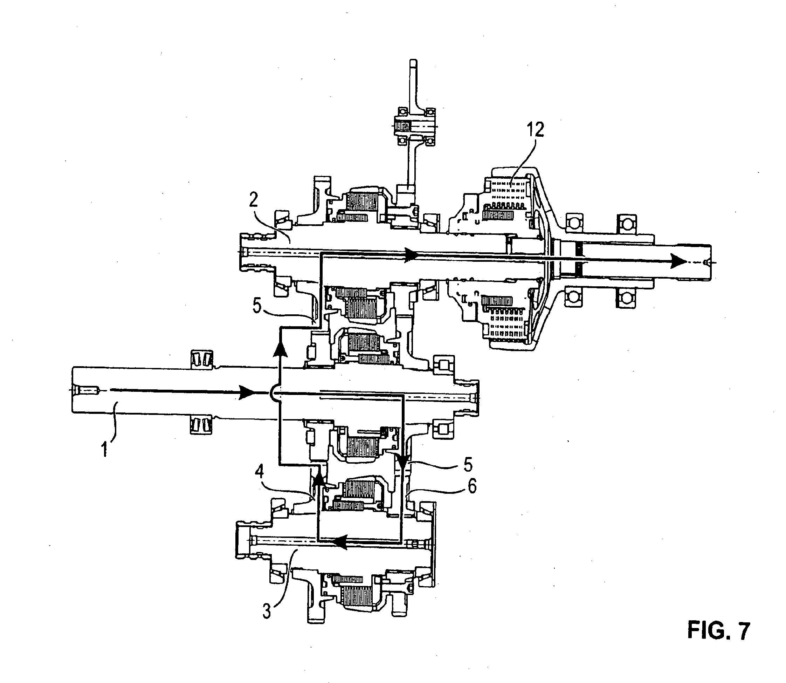

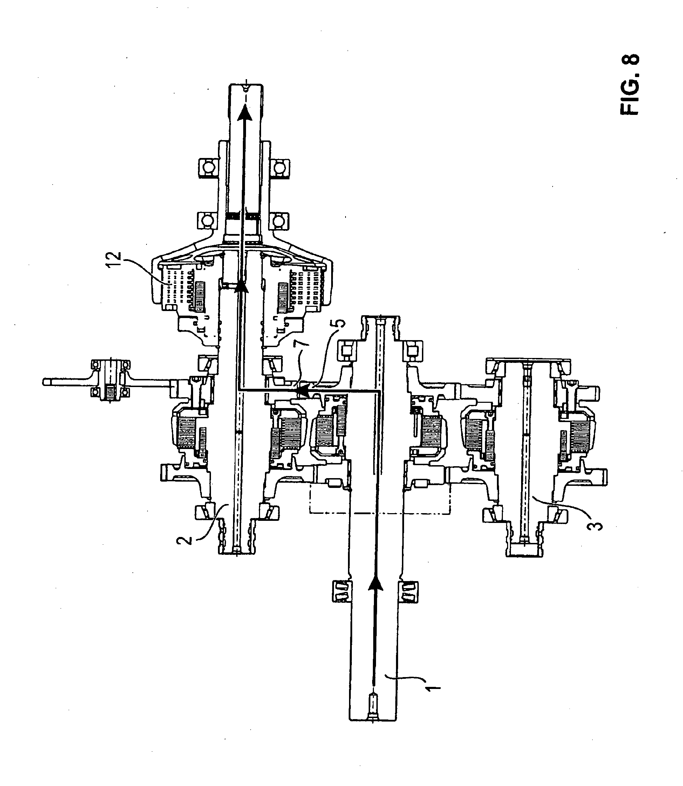

- Figuren 6 - 8:: Kraftflüsse bei verschiedenen Gängen des zweiten Ausführungsbeispiels des Getriebes;
- Figur 9:: ein Drehmoment-Drehzahl-Diagramm des Getriebes; und
- Figur 10:: eine Ansicht der eingebauten Getriebe (linke und rechte Ausführung).

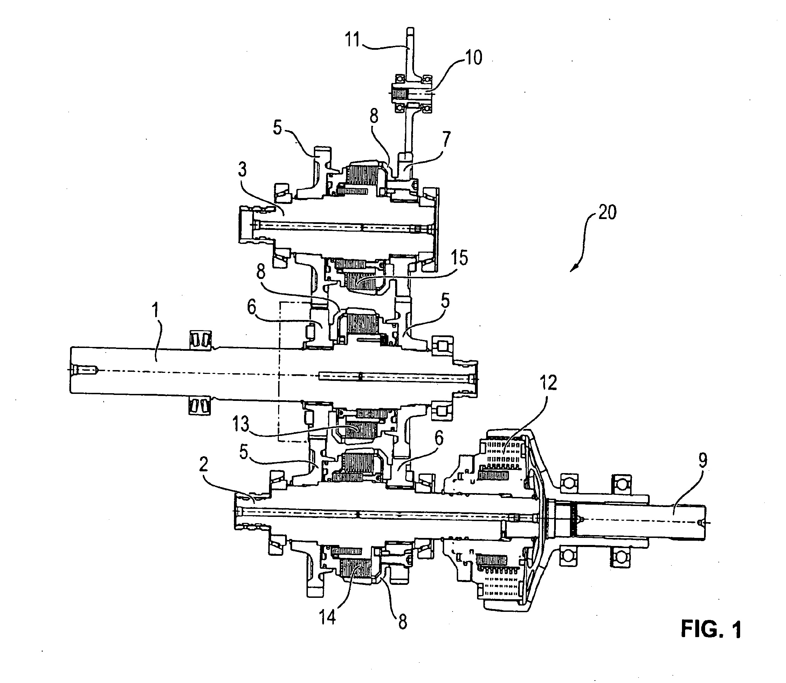

Figur 1 zeigt ein erstes Ausführungsbeispiel des Getriebes 20, mit einer Antriebswelle 1, einer Abtriebswelle 2 und einer Zwischenwelle 3 mit je wenigstens zwei Stirnrädern 5, 6, 7 sowie wenigstens je einer hydraulischen Schaltkupplung 13, 14, 15. An der Abtriebswelle 2 ist die Überlastkupplung 12 vorgesehen, die die Abtriebswelle 2 mit der Ausgangswelle 9 lösbar kuppelt. Im oberen Bereich der Anordnung ist ferner eine weitere Welle 10 mit einem darauf gelagerten Stirnrad 11 gezeigt, die zum Verbinden einer Antriebsquelle mit einer weiteren abgezweigten Anwendung vorgesehen sein kann.

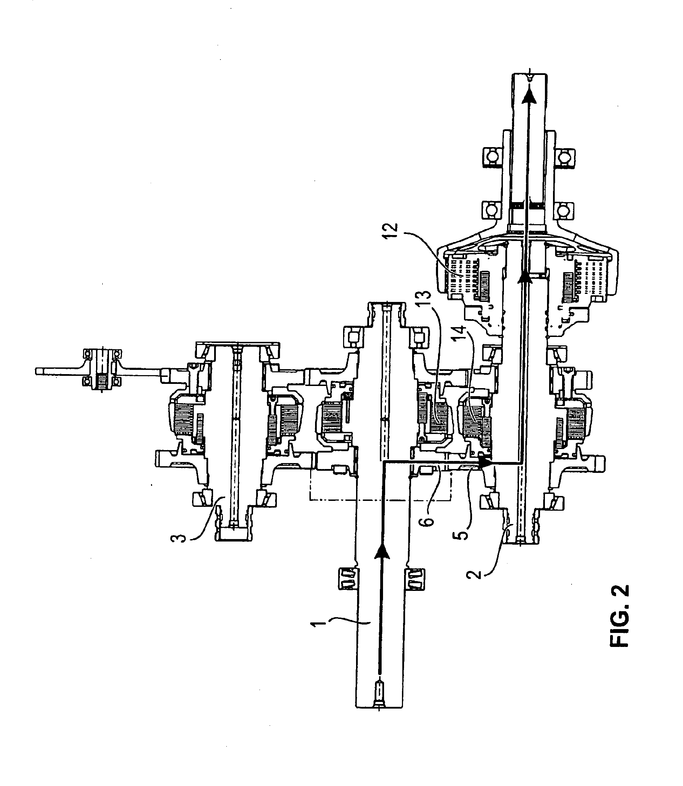

Figur 2 zeigt den Kraftfluss im ersten Ausführungsbeispiel des Getriebes 20, wenn der erste Gang eingelegt ist. Hierbei ist die Antriebswelle 1 direkt über die Stirnräder 5 und 6 mit der Abtriebswelle 2 gekoppelt, die hydraulischen Schaltkupplungen 13 und 14 von Antriebswelle 1 und Abtriebswelle 2 sind entsprechend geschaltet. Die Zwischenwelle 3 nimmt nicht an der Kraftübertragung teil, die Überlastkupplung 12 ist eingekuppelt, sodass die Walze der Zerkleinerungsmaschine in einem langsamen aber drehmomentstarken Gang drehbar ist.

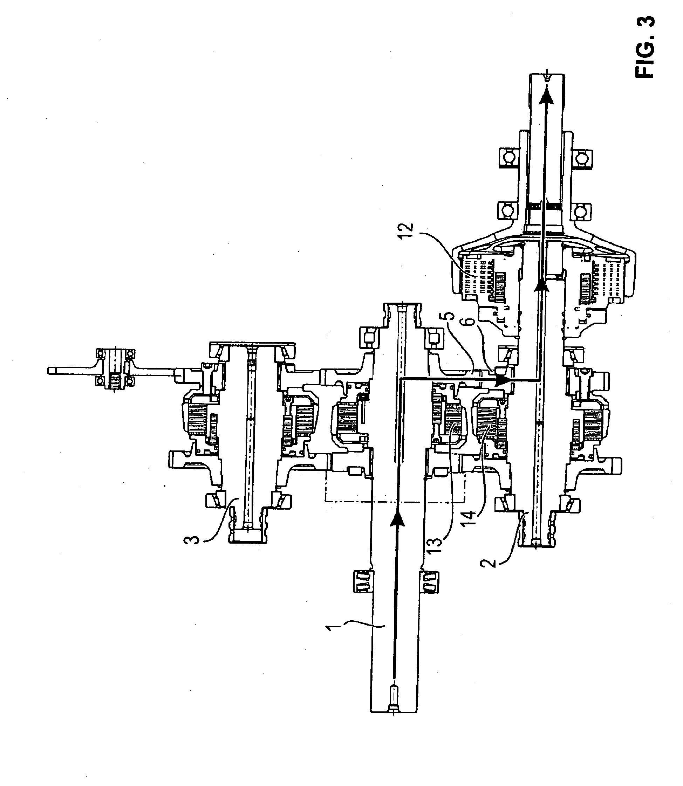

Figur 3 zeigt das gleiche Ausführungsbeispiel bei dem allerdings der zweite Gang eingekuppelt ist. Hierfür sind die Antriebswelle 1 und die Abtriebswelle 2 über die Stirnräder 6 und 5 miteinander gekoppelt. Hierbei ist zu bemerken, dass sowohl die Antriebswelle 1 als auch die Abtriebswelle 2 je ein Stirnrad 5 und je ein Stirnrad 6 aufweisen.

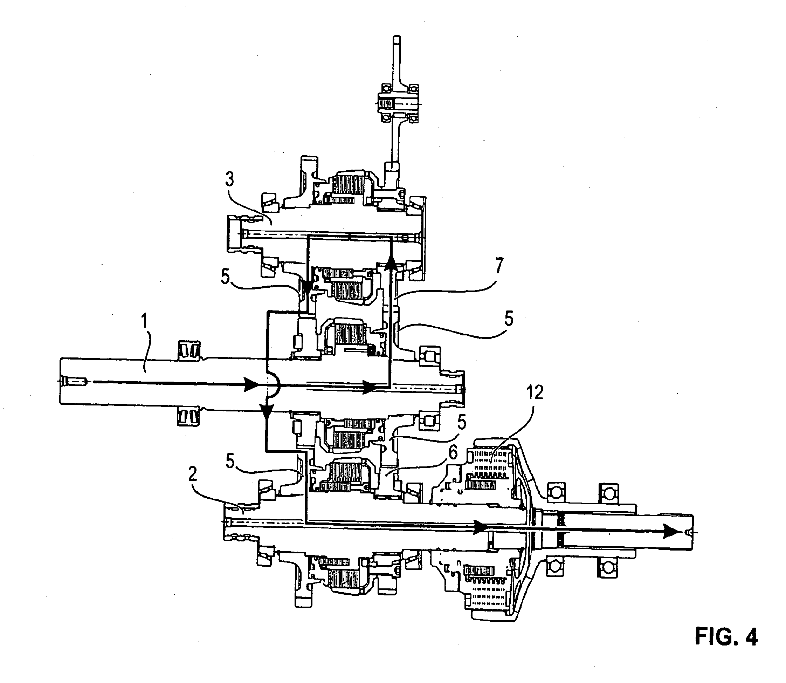

Figur 4 zeigt den Kraftfluss beim eingelegten Rückwärtsgang des ersten Ausführungsbeispiels des Getriebes 20. Hierbei ist die Antriebswelle 1 zunächst mit der Zwischenwelle 3 über die Stirnräder 5 und 7 gekoppelt. Die Zwischenwelle 3 wiederum ist mit der Abtriebswelle 2 über die Stirnräder 5 und 5 gekoppelt.

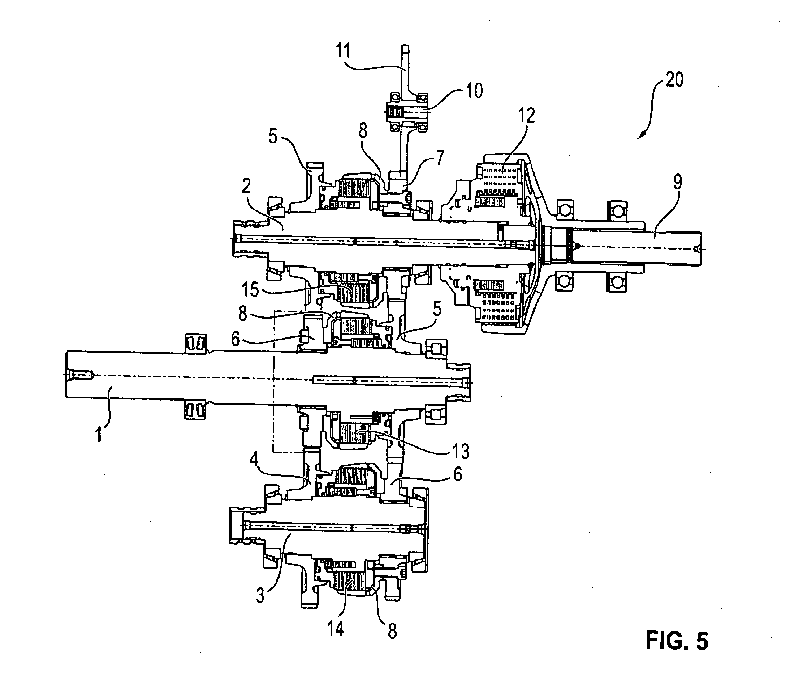

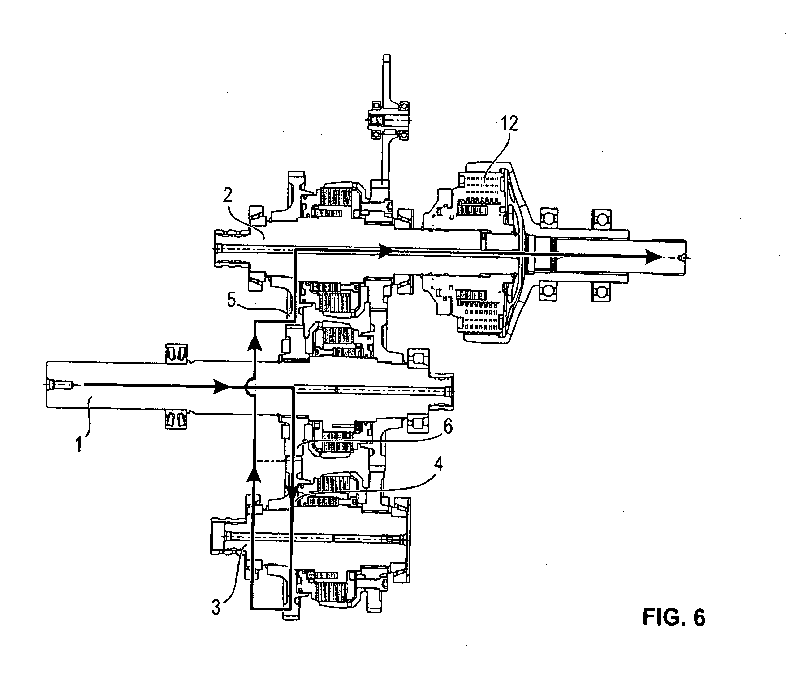

Figur 5 zeigt ein zweites Ausführungsbeispiel des Getriebes 20, bei dem die zusätzliche Welle 10 nicht mit der Zwischenwelle 3 sondern mit der Abtriebswelle 2 gekoppelt ist (linkes und rechtes Getriebe in dem Zerkleinerer). Der Kraftfluss im zweiten Ausführungsbeispiel des Getriebes 20 erfolgt analog zum ersten Ausführungsbeispiel und ist in den Figuren 6 (1. Gang), 7 (2. Gang) und 8 (Rückwärtsgang) aufgezeigt.

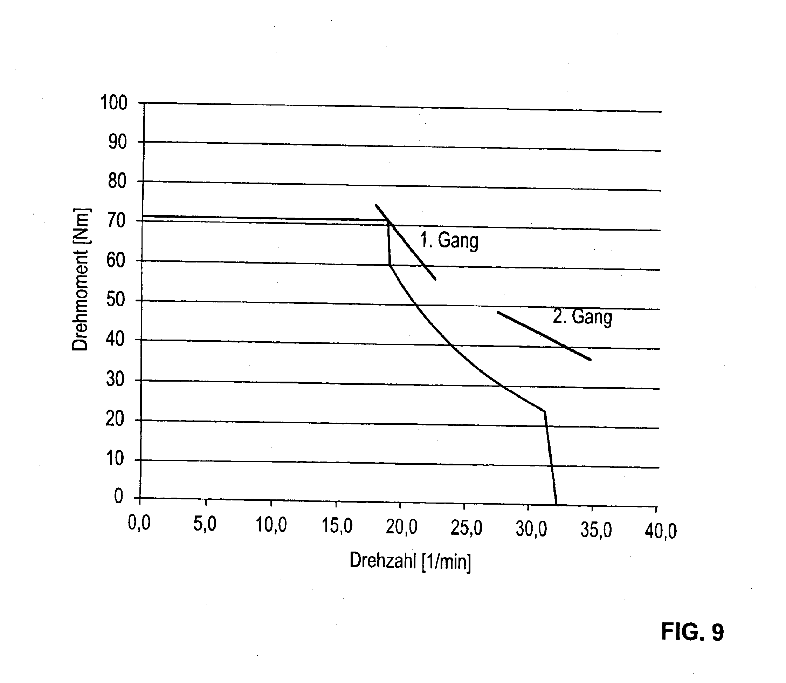

Figur 9 zeigt ein Drehmoment-Drehzahl-Diagramm. Hieraus ist zu erkennen, dass im ersten Gang des Getriebes 20 zwar ein höheres Drehmoment als im zweiten Gang bereitstellbar ist, nämlich im gezeigten Ausführungsbeispiel von 75kN/m, jedoch dieses erhöhte Drehmoment mit einer verringerten Drehzahl von 23 Umdrehungen pro Minute einhergeht. Der dargestellte Bereich wird durch die Drückung des Dieselmotors erreicht. Im Falle eines Elektromotors als Antrieb, wären es 2 Betriebspunkte im Diagramm.

Im schnelleren zweiten Gang, der eine Drehzahl von ca. 28 bis 35 Umdrehungen pro Minute erreicht ist dagegen nur ein verringertes Drehmoment bereitstellbar, welches im gezeigten Ausführungsbeispiel bei 49kN/m liegt.

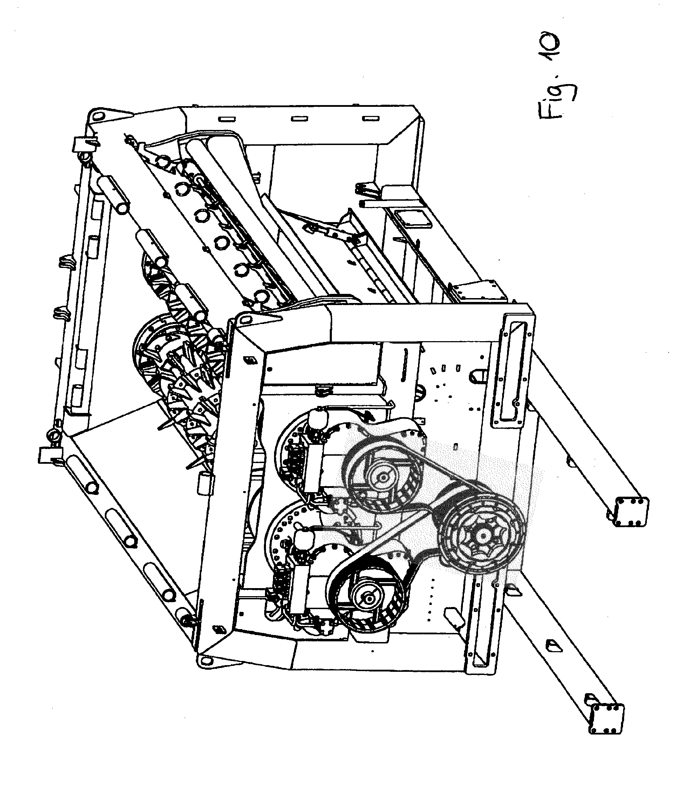

Figur 10 zeigt eine Zerkleinerungsmaschine mit darin eingebauten Getrieben 20.

## Patentansprüche

1. Getriebe (20) für Zerkleinerungsmaschine, mit einer Antriebswelle (1), einer Abtriebswelle (2) und einer Zwischenwelle (3) mit je wenigstens zwei Stirnrädern (5, 6, 7) und wenigstens je einer hydraulischen Schaltkupplung (13, 14, 15), und mit wenigstens einer Überlastkupplung (12), wobei die Wellen (1, 2, 3) über die Stirnräder (5, 6, 7) und über die hydraulischen Schaltkupplungen (13, 14, 15) miteinander lösbar koppelbar sind und wobei die Abtriebswelle (2) mittels der Überlastkupplung (12) mit einem Planetengetriebe und in weiterer Folge mit einer Zerkleinerungswelle kuppelbar ist.

2. Getriebe (20) nach Anspruch 1, **dadurch gekennzeichnet, dass** das Getriebe (20) drei Gänge umfasst.

3. Getriebe (20) nach Anspruch 2, **dadurch gekennzeichnet, dass** die drei Gänge zwei gleichgerichtete Gänge umfassen, wobei ein erster Gang eine Übersetzung ins Langsame und ein zweiter Gang eine Übersetzung ins Schnelle aufweist, und wobei ein dritter Gang ein zum ersten und zweiten Gang entgegengerichteter Gang ist.

4. Getriebe (20) nach Anspruch 3, **dadurch gekennzeichnet, dass** im ersten Gang der Druck in der Überlastkupplung (12) höher als im zweiten Gang ist.

5. Getriebe (20) nach einem der vorhergehenden Ansprüche, **dadurch gekennzeichnet, dass** die Überlastkupplung (12) außerhalb eines Hauptgehäuses des Getriebes vorgesehen ist.

6. Getriebe (20) nach einem der vorhergehenden Ansprüche, **dadurch gekennzeichnet, dass** zwei Drehzahlsensoren zum Überprüfen eines Rutschens der Überlastkupplung (12) vor und nach einem Auskuppeln und Einkuppeln der Überlastkupplung (12) vorgesehen sind.

7. Getriebe (20) nach einem der vorhergehenden Ansprüche, **dadurch gekennzeichnet, dass** das Getriebe (20) eine manuelle oder eine integrierte automatische Schaltung umfasst.

8. Getriebe (20) nach Anspruch 7, **dadurch gekennzeichnet, dass** die integrierte automatische Schaltung in den ersten Gang schaltet, wenn sie zuvor im zweiten Gang innerhalb einer definierten Zeit blockiert worden ist und wobei die integrierte automatische Schaltung wieder vom ersten in den zweiten Gang schaltet, wenn ein definierter Lastfaktor des Antriebsmotors innerhalb einer definierten Zeit nicht überschritten worden ist.

9. Getriebe (20) nach einem der vorhergehenden Ansprüche, **dadurch gekennzeichnet, dass** die Überlastkupplung (12) bei blockierter Ausgangswelle (9) erst nach einer definierten Zeit auskuppelt, um das Drehmoment an zu zerkleinerndem Material aufrechtzuerhalten.

10. Getriebe (20) nach einem der vorhergehenden Ansprüche, **dadurch gekennzeichnet, dass** bei einer rutschenden Überlastkupplung (12) das volle Drehmoment auf die Ausgangswelle (9) übertragbar ist.

11. Getriebe (20) nach einem der vorhergehenden Ansprüche, **dadurch gekennzeichnet, dass** eine Steuerung zur Berechnung der Temperatur der Überlastkupplung (12) vorgesehen ist.

12. Zerkleinerungsmaschine mit wenigstens einem Getriebe (20) nach einem der vorhergehenden Ansprüche.

## Claims

1. A transmission (20) for shredding machines, comprising a drive shaft (1), a driven shaft (2) and an intermediate shaft (3) with at least two spur gears (5, 6, 7) each and at least one hydraulic shift clutch (13, 14, 15) each, and with at least one overload clutch (12), wherein the shafts (1, 2, 3) can releasably be coupled with each other via the spur gears (5, 6, 7) and via the hydraulic shift clutches (13, 14, 15), and wherein the driven shaft (2) can be coupled with a planetary transmission and furthermore with a shredding shaft by means of the overload clutch (12).

2. The transmission (20) according to claim 1, **characterized in that** the transmission (20) comprises three gears.

3. The transmission (20) according to claim 2, **characterized in that** the three gears comprise two gears in the same direction, wherein a first gear has a step-down ratio and a second gear has a step-up ratio, and wherein a third gear is a gear directed opposite to the first and the second gear.

4. The transmission (20) according to claim 3, **characterized in that** in the first gear the pressure in the overload clutch (12) is higher than in the second gear.

5. The transmission (20) according to any of the preceding claims, **characterized in that** the overload clutch (12) is provided outside a main housing of the transmission.

6. The transmission (20) according to any of the preceding claims, **characterized in that** two speed sensors are provided for checking a slip of the overload clutch (12) before and after disengaging and engaging the overload clutch (12).

7. The transmission (20) according to any of the preceding claims, **characterized in that** the transmission (20) comprises a manual or an integrated automatic gearshift mechanism.

8. The transmission (20) according to claim 7, **characterized in that** the integrated automatic gearshift mechanism shifts into the first gear when it has previously been blocked in the second gear within a defined period, and wherein the integrated automatic gearshift mechanism again shifts from the first into the second gear when a defined load factor of the drive motor has not been exceeded within a defined period.

9. The transmission (20) according to any of the preceding claims, **characterized in that** with blocked output shaft (9) the overload clutch (12) will only disengage after a defined period, in order to maintain the torque of material to be shredded.

10. The transmission (20) according to any of the preceding claims, **characterized in that** with slipping overload clutch (12) the full torque can be transmitted to the output shaft (9).

11. The transmission (20) according to any of the preceding claims, **characterized in that** a controller is provided for calculating the temperature of the overload clutch (12).

12. A shredding machine with at least one transmission (20) according to any of the preceding claims.

## Revendications

1. Engrenage (20) pour un broyeur, comportant un arbre d'entraînement (1), un arbre de sortie (2) et un arbre intermédiaire (3) avec chacun au moins deux pignons droits (5, 6, 7) et au moins chacun un embrayage hydraulique (13, 14, 15), et au moins un accouplement de surcharge (12), les arbres (1, 2, 3) étant couplés de manière amovible par l'intermédiaire des pignons droits (5, 6, 7) et des embrayages hydrauliques (13, 14, 15) et l'arbre de sortie (2) pouvant être couplé au moyen de l'accouplement de surcharge (12) avec un engrenage planétaire et par la suite avec un arbre broyeur.

2. Engrenage (20) selon la revendication 1, **caractérisé en ce que** l'engrenage (20) comprend trois vitesses.

3. Engrenage (20) selon la revendication 2, **caractérisé en ce que** les trois vitesses comprennent deux vitesses de même direction, une première vitesse présentant une démultiplication et une seconde vitesse présentant une multiplication par engrenage, et une troisième vitesse étant une vitesse dirigée en sens opposé à la première et la seconde vitesse.

4. Engrenage (20) selon la revendication 3, **caractérisé en ce que** la pression dans l'accouplement de surcharge (12) est plus élevée en première vitesse qu'en seconde vitesse.

5. Engrenage (20) selon l'une des revendications précédentes, **caractérisé en ce que** l'accouplement de surcharge (12) est prévu à l'extérieur d'un carter principal de l'engrenage.

6. Engrenage (20) selon l'une des revendications précédentes, **caractérisé en ce que** deux capteurs de vitesse sont prévus pour contrôler un dérapage de l'accouplement de surcharge (12) avant et après un débrayage et embrayage de l'accouplement de surcharge (12).

7. Engrenage (20) selon l'une des revendications précédentes, **caractérisé en ce que** l'engrenage (20) comprend un changement de vitesse manuel ou automatique intégré.

8. Engrenage (20) selon la revendication 7, **caractérisé en ce que** le changement de vitesse intégré automatique enclenche la première vitesse lorsqu'il a été préalablement bloqué en seconde vitesse dans un délai défini et le changement de vitesse intégré automatique repasse de la première à la seconde vitesse lorsqu'un facteur de charge défini du moteur d'entraînement n'a pas été dépassé dans un délai défini.

9. Engrenage (20) selon l'une des revendications précédentes, **caractérisé en ce que** l'accouplement de surcharge (12) ne débraye qu'après un intervalle de temps défini en cas d'arbre de sortie (9) bloqué pour maintenir le couple au niveau du matériau à broyer.

10. Engrenage (20) selon l'une des revendications précédentes, **caractérisé en ce que** le couple maximal peut être transmis à l'arbre de sortie (9) en cas d'accouplement de surcharge (12) qui dérape.

11. Engrenage (20) selon l'une des revendications précédentes, **caractérisé en ce qu'**une commande est prévue pour calculer la température de l'accouplement de surcharge (12).

12. Broyeur comportant au moins un engrenage (20) selon l'une des revendications précédentes.
